# EUROPEAN PATENT SPECIFICATION

(11) **EP 2 910 537 B1**
(45) Date of publication and mention of the grant of the patent: **14.02.2024**
(21) Application number: 13847455.6
(22) Date of filing: 20.09.2013
(51) Int. Cl.: C06D 5/06

(54) **GAS-GENERATING-AGENT COMPOSITION**
ZUSAMMENSETZUNG MIT EINEM GASERZEUGENDEN MITTEL
COMPOSITION D'AGENT GÉNÉRANT DU GAZ

(30) Priority: 18.10.2012 JP 2012230686
(43) Date of publication of application: 26.08.2015
(73) Proprietor: Daicel Corporation, Osaka-shi, Osaka 530-0011 (JP)
(72) Inventor: FUJISAKI Yoji, Tatsuno-shi Hyogo 671-1681 (JP); MATSUDA Naoki, Tatsuno-shi Hyogo 671-1681 (JP)
(74) Representative: Grünecker Patent- und Rechtsanwälte PartG mbB
(86) International application number: PCT/JP2013/075410
(87) International publication number: WO 2014/061398

(56) References cited:
- WO-A1-2012/128302
- WO-A1-2012/128302
- WO-A1-2012/133072
- JP-A- 2010 269 969
- US-A1- 2008 105 342

## Description

### Technical Field

The present invention relates to a gas generating composition that can be used in a gas generator for an airbag apparatus.

### Background Art

The output of a gas generator during actuation changes depending on the external ambient temperature during the actuation. Accordingly, stabilizing the generated output within the desirable range in the actuation period of time of the gas generator is an important task for gas generators for airbag apparatuses which are safety devices.

In JP-A No. H08-175312, an attempt is made to eliminate output fluctuations of a gas generator by providing a buffer chamber for absorbing pressure fluctuations occurring in a combustion chamber in the course of combustion inside the gas generator.

In JP-B No. 2989788 (JP-A No. H10-181516), the output of a gas generator is stabilized by associating the gas generation amount with the opening area of the gas discharge port of the gas generator.

JP-B No. 3476771 (JP-A No. 2001-226188) and JP-B No. 4498927 (WO-A No. 2004/048296) disclose inventions in which the generated pressure is stabilized by maintaining a constant amount of generated gas when a molded article of a gas generating composition is burned by optimizing the shape of the molded article of the gas generating composition.
US 2008/0105342 A1 discloses a gas generating composition. WO 2012/128302 A1 discloses a gas-generating agent composition.

### Summary of the Invention

The subject matter of the invention is as set out in the appended claims.

The invention relates to a gas generating composition comprising (a) a fuel and (b) an oxidizing agent, the composition meeting the following requirements (I) and (II):
(I) when ignited for combustion at an ambient temperature within a range of -40°C to 85°C, the combustion temperature is the melting point of a substance included in the combustion residue; and
(II) when ignited for combustion at ambient temperatures of -40°C and 85°C, the difference between the combustion temperatures is less than 125 K,
   wherein
   the fuel (a) is a combination of melamine cyanurate and nitroguanidine, and
   the fuel (a) takes 15% by mass to 25% by mass and the oxidizing agent (b) takes 75% by mass to 85% by mass based on the total amount of fuel (a) and oxidizing agent (b).

Preferred embodiments are set out in the dependent claims.

The present specification also discloses a gas generating composition that includes: (a) 15% by mass to 30% by mass of a fuel, including no metal with a melting point higher than the melting point of copper; and (b) 70% by mass to 85% by mass of an oxidizing agent including (b-1) basic copper nitrate and (b-2) basic copper carbonate, with (b-1) taking 60% by mass to 70% by mass and (b-2) taking 30% by mass to 40% by mass in the total amount of (b-1) and (b-2), that does not include a metal hydroxide, and
that meets the following requirements (I) and (II):
(I) a combustion temperature at a time of ignition and combustion at any ambient temperature within a range of -40°C to 85°C is a melting point of copper (1358 K); and
(II) a difference between combustion temperatures at the time of ignition and combustion at ambient temperatures of -40°C and 85°C is less than 125 K.

### Brief Description of the Drawings

The present invention will become more fully understood from the detailed description given hereinbelow and the accompanying drawings which are given by way of illustration only, and thus are not limitative of the present invention and wherein:

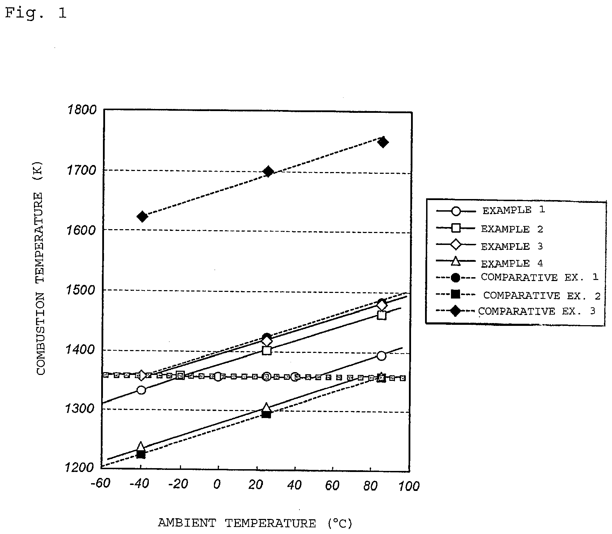

[Fig. 1] Fig. 1 illustrates the relationship between ambient temperature variations and combustion temperature variations in the gas generating compositions of the Examples and the Comparative Examples.

### Detailed Description of the Invention

In JP-A No. H08-175312, the gas generator is unavoidably increased in size, and a requirement in recent years to miniaturize the gas generators is difficult to meet.

In JP-B No. 2989788, the output of the gas generator is not stabilized by actively controlling the performance of the gas generating agent itself.

In JP-B No. 3476771 and JP-B No. 4498927, where the temperature or pressure changes during combustion, the amount of the gas generated from the gas generating agent changes by itself. Therefore, further improvement is needed to obtain more stable output performance.

The present invention is to provide a gas generating composition that can maintain stable combustion performance regardless of fluctuations in the ambient temperature at the time of actuation and also can maintain a stable output when used in a gas generator.

The gas generating composition of the present invention can maintain stable combustion performance regardless of fluctuations in the ambient temperature at the time of actuation.

### <(a) Fuel>

One, or two or more listed hereinbelow can be used as a fuel included in the gas generating composition of the present disclosure:
guanidine nitrate, aminoguanidine nitrate, nitroguanidine, triaminoguanidine nitrate;
a triazine compound such as melamine, cyanuric acid, melamine cyanurate, ammeline, and ammelide;
a nitroamine compound such as trimethylene trinitroamine (RDX), cyclotetramethylene tetranitramine (HMX), azodicarbonamide (ADCA), and dicyandiamide (DCDA);
a tetrazole derivative such as 5-aminotetrazole (5-AT) and a 5-aminotetrazole metal salt; and
a bitetrazole derivative such as bitetrazole, a bitetrazole metal salt, and bitetrazole ammonium salt.

It is further preferred that the fuel of the present invention include no metal with a melting point higher than the melting point of copper. The fuel of the present disclosure is preferably a combination of one or more first fuel components selected from melamine and melamine cyanurate, and one or more second fuel components selected from nitroguanidine and 5-aminotetrazole.

The combination of melamine cyanurate and nitroguanidine according to the present invention has the advantage that the heat generation amount can be reduced and a pressure index can be also reduced by a combination with an oxidizing agent.

### <(b) Oxidizing agent>

The oxidizing agent (b) preferably includes at least one selected from a basic metal nitrate, a basic carbonate, a nitrate, ammonium nitrate, a perchlorate, and a chlorate.

At least one selected from basic copper nitrate, basic cobalt nitrate, basic zinc nitrate, basic manganese nitrate, basic iron nitrate, basic molybdenum nitrate, basic bismuth nitrate, and basic cerium nitrate can be used as the basic metal nitrate.

At least one selected from basic cobalt carbonate, basic zinc carbonate, basic calcium carbonate, basic nickel carbonate, basic magnesium carbonate, and basic copper carbonate can be used as the basic carbonate.

An alkali metal nitrate such as potassium nitrate and sodium nitrate and an alkaline earth metal nitrate such as strontium nitrate can be used as the nitrate.

At least one selected from ammonium perchlorate, potassium perchlorate, sodium perchlorate, potassium chlorate, and sodium chlorate can be used as the perchlorate and chlorate.

Among them, the preferred oxidizing agent includes (b-1) basic copper nitrate and (b-2) basic copper carbonate.

The ratio of (b-1) and (b-2) is preferably such that (b-1) takes 60% by mass to 70% by mass and (b-2) takes 30% by mass to 40% by mass in the total amount thereof.

According to the invention, the ratio of the of the fuel which is the component (a) and the oxidizing agent which is the component (b) in the total amount thereof is such that the component (a) takes 15% by mass to 25% by mass, and the component (b) takes 75% by mass to 85% by mass.

The gas generating composition of the present invention may further include (c) a binder (not including a metal with a melting point higher than the melting point of copper) and/or (d) a combustion modifier (not including a metal with a melting point higher than the melting point of copper).

### <(c) Binder>

The composition of the present invention can further include a binder. The binder does not include a metal with a melting point higher than the melting point of copper.

The binder can be one or two or more selected from carboxymethyl cellulose (CMC), carboxymethyl cellulose sodium salt (CMCNa), carboxymethyl cellulose potassium salt, carboxymethyl cellulose ammonium salt, cellulose acetate, cellulose acetate butyrate (CAB), methyl cellulose (MC), ethyl cellulose (EC), hydroxyethyl cellulose (HEC), ethyl hydroxyethyl cellulose (EHEC), hydroxypropyl cellulose (HPC), carboxymethyl ethyl cellulose (CMEC), microcrystalline cellulose, polyacryl amide, amino compounds of polyacrylamide, polyacryl hydrazide, a copolymer of acrylamide and a metal salt of acrylic acid, a copolymer of polyacrylamide and a polyacrylic acid ester compound, polyvinyl alcohol, acrylic rubber, guagum, starch, and silicones. Among these, carboxymethyl cellulose sodium salt (CMCNa) is preferred taking into account the binder adhesive properties, costs, ignitability and the like.

### <(d) Combustion modifier>

The composition of the present invention can also further include a combustion modifier within a range in which the problem of the present invention can be resolved. The combustion modifier does not include a metal with a melting point higher than the melting point of copper.

The combustion modifier can be at least one selected from metal oxides such as copper (II) oxide, iron oxide, zinc oxide, cobalt oxide, manganese oxide, molybdenum oxide, nickel oxide, bismuth oxide, silica, and alumina; metal hydroxides such as aluminum hydroxide, magnesium hydroxide, cobalt hydroxide, and iron hydroxide; cobalt carbonate, calcium carbonate; complex compounds of metal oxides or hydroxides such as Japanese acid clay, kaolin, talc, bentonite, diatomaceous earth, and hydrotalcite; metal acid salts such as sodium silicate, mica molybdate, cobalt molybdate, and ammonium molybdate; silicones, molybdenum disulfide, calcium stearate, silicon nitride, silicon carbide, metaboric acid, boric acid, and anhydrous boric acid.

The composition of the present invention includes the fuel which is the component (a) and the oxidizing agent which is the component (b), and also meets the following requirements (I) and (II).

The ambient temperature is a temperature when a gas generator charged with the composition of the present invention is incorporated in an airbag apparatus mounted on a vehicle. For example, the ambient temperature in the summer is significantly different from that in the winter, and even in the same season, the ambient temperature differs significantly depending on whether the vehicle is parked in the sun or in the shade.

### <Requirement (I)>

The requirement (I) is that a combustion temperature at a time of ignition and combustion at any ambient temperature within a range of -40°C to 85°C is within a range of ± 10 K of the melting point (1358 K) of copper.

The requirement (I) is that the combustion temperature of the gas generating composition of the present invention at a specific temperature and within a specific temperature range at an ambient temperature within a range of -40°C to 85°C is within a range of ± 10 K of the melting point (1358 K) of copper.

For example, when the gas generating composition is used in a gas generator for an airbag apparatus to be installed in an automobile with cold region specifications, the requirement (I) can be met at a low temperature or in a low temperature range. Conversely, when the gas generating composition is used in a gas generator for an airbag apparatus to be installed in an automobile with tropical region specifications, the requirement (I) can be met at a high temperature or in a high temperature range.

### <Requirement (II)>

The requirement (II) is that a difference between combustion temperatures at the time of ignition and combustion at ambient temperatures of -40°C and 85°C is less than 125 K.

In the requirement (II), the difference is preferably equal to or less than 122 K, more preferably, equal to or less than 110 K, and even more preferably equal to or less than 105 K.

Where the requirements (I) and (II) are met, even when the amount of heat inside the combustion system increases due to an abrupt rise in pressure in the combustion container (a housing of the gas generator) during combustion, this amount of heat is absorbed by the melting heat (latent heat) of the substance (for example, copper) included in the combustion residue and the temperature inside the combustion system does not rise, thereby enabling stable combustion.

The "combustion temperature", as referred to in the present invention, is determined by theoretical computations from the gas generating composition used.

The gas generating composition in accordance with the present invention can be molded to the desired shape, and can be in the form of a molded article of a single-perforated columnar shape, a perforated columnar shape, or a pellet. The molded article can be manufactured by adding water or an organic solvent to the gas generating composition, mixing and extrusion-molding (a molded article in the form of a cylinder having a single hole or a perforated cylinder), or by compression-molding with a pelletizer or the like (a molded article in the shape of a pellet).

The gas generating composition in accordance with the present invention and a molded article obtained therefrom can be used, for example, in an airbag inflator of a driver seat, an airbag inflator of a passenger seat next to the driver, a side airbag inflator, an inflator for an inflatable curtain, an inflator for a knee bolster, an inflator for an inflatable seat belt, an inflator for a tubular system, and an inflator for a pretensioner of various vehicles.

The inflator using the gas generating composition in accordance with the present invention or a molded article obtained therefrom may be of a pyrotechnic type in which a gas supplying source is only a gas generating agent and of a hybrid type which uses both a compressed gas such as argon and a gas generating agent.

The gas generating composition in accordance with the present invention or a molded article obtained therefrom can be also used as an igniting agent called an enhancer (or a booster) or the like, serving to transmit the energy of a detonator or a squib to the gas generating agent.

### Examples

### Example and Comparative Example

Gas generating compositions having the compositions shown in Table 1 were produced. Examples 2 and 3 are Reference Examples. The combustion temperature at the time when the ambient temperature has changed (requirement (I)) and the difference between combustion temperatures (requirement (II)) are shown in Table 1, and the combustion temperature at different ambient temperatures shown in Table 1 is depicted in a graphical form in Fig. 1.

**Table 1 (Examples 2 and 3 are Reference Examples)**

| | (a) | | | (b) | | (c) | Al(OH)₃ | Combustion temperature at variations of ambient temperature (K) | | | | | | | | | Difference between combustion temperatures |
|---|---|---|---|---|---|---|---|---|---|---|---|---|---|---|---|---|---|
| | MC | NQ | GN | BCN | BCC | CMCNa | | -40 | -20 | -10 | 0 | 25 | 40 | 50 | 60 | 85 | |
| Example 1 | 11.2 | 12.3 | | 46.5 | 25.0 | 5.0 | | 1332 | | 1358 | 1358 | 1358 | 1358 | | | 1395 | 63 |
| Example 2 | 9.7 | 15.1 | | 45.2 | 25.0 | 5.0 | | 1358 | 1358 | | | 1401 | | | | 1462 | 104 |
| Example 3 | 9.3 | 15.9 | | 44.8 | 25.0 | 5.0 | | 1358 | | | | 1418 | | | | 1479 | 121 |
| Example 4 | 13.3 | 8.3 | | 48.4 | 25.0 | 5.0 | | 1236 | | | | 1305 | | | | 1358 | 122 |
| Comparative Ex. 1 | 9.2 | 16.1 | | 44.7 | 25.0 | 5.0 | | 1358 | | | | 1423 | | | | 1483 | 125 |
| Comparative Ex. 2 | 13.5 | 8.0 | | 48.5 | 25.0 | 5.0 | | 1226 | | | | 1295 | | | | 1357 | 131 |
| Comparative Ex. 3 | | | 40.71 | 49.29 | | 5.00 | 5.00 | 1621 | | | | 1700 | | | | 1749 | 128 |

In the composition of Example 1, the combustion temperature within an ambient temperature range from 0°C to 40°C matches the melting point (1358 K) of copper (requirement (I)). For example, the combustion temperature at -40°C in Fig. 1 is 1332°C, but the combustion temperature at -10°C, 0°C, 25°C, and 40°C matches the melting point of copper.

In the composition of Reference Example 2, the combustion temperature within an ambient temperature range from -40°C to -20°C matches the melting point (1358 K) of copper (requirement (I)).

In the composition of Reference Example 3, the combustion temperature at -40°C matches the melting point (1358 K) of copper (requirement (I)).

In the composition of Example 4, the combustion temperature at 85°C matches the melting point (1358 K) of copper (requirement (I)).

Thus, in the compositions of Example 1, Reference Examples 2 and 3, and Example 4, the combustion temperature is not found to rise despite variations in the ambient temperature close to -10°C to 40°C (Fig. 1). As a result, the difference between the combustion temperature at the ambient temperature of 85°C and the combustion temperature at the ambient temperature of -40°C becomes equal to or less than 122 K (requirement (II)), and therefore stable ignition and combustion performance can be maintained regardless of the variations in the ambient temperature.

The composition of Comparative Example 1 is close to that of Reference Example 3 and the requirement (I) is met, but the difference between the combustion temperature is 125 K, and the requirement (II) is not met.

The compositions of Comparative Examples 2 and 3 do not meet the requirements (I) and (II).

Therefore, in Comparative Examples 1 to 3, when the ambient temperature changes, stable ignition and combustion performance cannot be maintained.

## Claims

1. A gas generating composition comprising (a) a fuel and (b) an oxidizing agent, the composition meeting the following requirements (I) and (II):
(I) when ignited for combustion at an ambient temperature within a range of -40°C to 85°C, the combustion temperature is within a range of +/- 10 K of the melting point of copper (1358 K);
and
(II) when ignited for combustion at ambient temperatures of -40°C and 85°C, the difference between the combustion temperatures is less than 125 K,
wherein
the fuel (a) is a combination of melamine cyanurate and nitroguanidine, and
the fuel (a) takes 15% by mass to 25% by mass and the oxidizing agent (b) takes 75% by mass to 85% by mass based on the total amount of fuel (a) and oxidizing agent (b).

2. The gas generating composition according to claim 1, that comprises:
(b) an oxidizing agent including (b-1) basic copper nitrate and (b-2) basic copper carbonate, with (b-1) taking 60% by mass to 70% by mass and (b-2) taking 30% by mass to 40% by mass in the total amount of (b-1) and (b-2),
that does not comprise a metal hydroxide, and that meets the following requirement (I):
(I) the melting point of a substance included in the combustion residue is a melting point of copper (1358 K).

3. The gas generating composition according to claim 1 or 2, further comprising (c) a binder, not including a metal with a melting point higher than the melting point of copper, and/or (d) a combustion modifier, not including a metal with a melting point higher than the melting point of copper.

4. The gas generating composition according to any one of claims 1 to 3, the composition meeting the following requirement (II):
(II) when ignited for combustion at ambient temperatures of -40°C and 85°C, the difference between the combustion temperatures is equal to or less than 110 K.

5. The gas generating composition according to any one of claims 1 to 4, the composition meeting the following requirement (II):
(II) when ignited for combustion at ambient temperatures of -40°C and 85°C, the difference between the combustion temperatures is equal to or less than 105 K.

## Patentansprüche

1. Gaserzeugende Zusammensetzung, die (a) einen Brennstoff und (b) ein Oxidationsmittel enthält, wobei die Zusammensetzung die folgenden Anforderungen (I) und (II) erfüllt:
(I) bei der Zündung zur Verbrennung bei einer Umgebungstemperatur im Bereich von -40°C bis 85°C liegt die Verbrennungstemperatur innerhalb eines Bereichs von +/- 10 K des Schmelzpunkts von Kupfer (1358 K); und
(II) bei der Zündung zur Verbrennung bei Umgebungstemperaturen von -40°C und 85°C beträgt die Differenz zwischen den Verbrennungstemperaturen weniger als 125 K,
wobei
der Brennstoff (a) eine Kombination aus Melamincyanurat und Nitroguanidin ist, und
der Brennstoff (a) 15 Massenprozent bis 25 Massenprozent und das Oxidationsmittel (b) 75 Massenprozent bis 85 Massenprozent, bezogen auf die Gesamtmenge an Brennstoff (a) und Oxidationsmittel (b), einnimmt.

2. Die gaserzeugende Zusammensetzung nach Anspruch 1, die umfasst:
(b) ein Oxidationsmittel, einschließlich (b-1) basisches Kupfernitrat und (b-2) basisches Kupfercarbonat,
wobei (b-1) 60 Massenprozent bis 70 Massenprozent und (b-2) 30 Massenprozent bis 40 Massenprozent der Gesamtmenge von (b-1) und (b-2) einnimmt,
das kein Metallhydroxid enthält und die folgende Anforderung (I) erfüllt:
(I) Der Schmelzpunkt eines im Verbrennungsrückstand enthaltenen Stoffes ist ein Schmelzpunkt von Kupfer (1358 K).

3. Die gaserzeugende Zusammensetzung nach Anspruch 1 oder 2, ferner umfassend (c) ein Bindemittel, das kein Metall mit einem höheren Schmelzpunkt als dem Schmelzpunkt von Kupfer enthält, und/oder (d) einen Verbrennungsmodifikator, der kein Metall mit einem höheren Schmelzpunkt als dem Schmelzpunkt von Kupfer enthält.

4. Die gaserzeugende Zusammensetzung nach einem der Ansprüche 1 bis 3, wobei die Zusammensetzung die folgende Anforderung (II) erfüllt:
(II) bei der Zündung zur Verbrennung bei Umgebungstemperaturen von -40 °C und 85 °C die Differenz zwischen den Verbrennungstemperaturen gleich oder kleiner als 110 K ist.

5. Die gaserzeugende Zusammensetzung nach einem der Ansprüche 1 bis 4, wobei die Zusammensetzung die folgende Anforderung (II) erfüllt:
(II) bei der Zündung zur Verbrennung bei Umgebungstemperaturen von -40°C und 85°C die Differenz zwischen den Verbrennungstemperaturen gleich oder kleiner als 105 K ist.

## Revendications

1. Composition générant du gaz comprenant (a) un combustible et (b) un comburant, la composition répondant aux exigences (I) et (II) suivantes :
(I) lorsqu'elle est enflammée pour la combustion à une température ambiante dans une plage de -40 °C à 85 °C, la température de combustion est dans une plage de +/- 10 K du point de fusion du cuivre (1358 K) ;
et
(II) lorsqu'elle est enflammée pour la combustion à des températures ambiantes de -40 °C à 85 °C, la différence entre les températures de combustion est inférieure à 125 K,
dans laquelle
le combustible (a) est une association de cyanurate de mélamine et de nitroguanidine, et
le combustible (a) représente de 15 % en masse à 25 % en masse et le comburant (b) représente de 75 % en masse à 85 % en masse sur la base de la quantité totale de combustible (a) et de comburant (b).

2. Composition générant du gaz selon la revendication 1, qui comprend :
(b) un comburant comportant (b-1) du nitrate de cuivre basique et (b-2) du carbonate de cuivre basique, (b-1) représentant de 60 % en masse à 70 % en masse et (b-2) représentant de 30 % en masse à 40 % en masse de la quantité totale de (b-1) et (b-2),
qui ne comprend pas d'hydroxyde métallique, et qui répond à l'exigence (I) suivante :
(I) le point de fusion d'une substance incluse dans le résidu de combustion est le point de fusion du cuivre (1358 K).

3. Composition générant du gaz selon la revendication 1 ou 2, comprenant en outre (c) un liant, ne comportant pas de métal ayant un point de fusion est supérieur au point de fusion du cuivre, et/ou (d) un modificateur de combustion, ne comportant pas de métal ayant un point de fusion supérieur au point de fusion du cuivre.

4. Composition générant du gaz selon l'une quelconque des revendications 1 à 3, la composition répondant à l'exigence (II) suivante :
(II) lorsqu'elle est enflammée pour la combustion à des températures ambiantes de -40 °C à 85 °C, la différence entre les températures de combustion est inférieure ou égale à 110 K.

5. Composition générant du gaz selon l'une quelconque des revendications 1 à 4, la composition répondant à l'exigence (II) suivante :
(II) lorsqu'elle est enflammée pour la combustion à des températures ambiantes de -40 °C à 85 °C, la différence entre les températures de combustion est inférieure ou égale à 105 K.
